# EUROPEAN PATENT APPLICATION

(11) **EP 4 068 481 A2**
(43) Date of publication of application: **05.10.2022**
(21) Application number: 22164757.1
(22) Date of filing: 28.03.2022
(51) Int. Cl.: H01M 50/211, H01M 50/296, H01M 50/298, H01M 50/503

(54) **POWER STORAGE DEVICE**

(30) Priority: 31.03.2021 JP 2021060854
(71) Applicant: TOYOTA JIDOSHA KABUSHIKI KAISHA, Toyota-shi, Aichi-ken, 471-8571 (JP)
(72) Inventor: KATO, Masashi, Toyota-shi, 471-8571 (JP)
(74) Representative: J A Kemp LLP

(57) **Abstract**

A power storage device includes: a power storage module (20, 20A, 20B); and a first bus bar (22, 22A, 22B) and a second bus bar (21, 21A, 21B) that are connected to the power storage module (20, 20A, 20B). The power storage module (20, 20A, 20B) includes: a first long side portion (80) and a second long side portion (81), and a first short side portion (82) and a second short side portion (83). The power storage module (20, 20A, 20B) includes a first current collector plate (70) provided in the first long side portion (80), and a second current collector plate (38) provided in the second long side portion (81). The first bus bar (22, 22A, 22B) includes a first connecting portion (75) provided in the first current collector plate (70). The second bus bar (21, 21A, 21B) includes a second connecting portion (65) provided in the second current collector plate (38).

## Description

This nonprovisional application is based on Japanese Patent Application No. 2021-060854 filed on March 31, 2021 with the Japan Patent Office, the entire contents of which are hereby incorporated by reference.

### BACKGROUND

### Field

The present disclosure relates to a power storage device.

### Description of the Background Art

There have conventionally been proposed various types of power storage devices each including a power storage module formed by stacking a plurality of power storage cells. A power storage device disclosed in Japanese Patent Laying-Open No. 2013-229266 includes a power storage module, a pair of bus bar modules, and an accommodation case.

The power storage module includes a plurality of power storage cells stacked in the up-down direction. The accommodation case includes side walls disposed on both sides of the power storage module, and end plates disposed on upper and lower surfaces.

Each of the power storage cells includes a laminate film, and an electrode assembly and an electrolyte solution that are accommodated in the laminate film.

### SUMMARY

In the above-described power storage device, for example, when the position of the positive electrode external terminal or the negative electrode external terminal is changed, the routing length of a bus bar (the length in which a bus bar is routed) increases, which makes it difficult to change the positions of these external terminals.

The present disclosure has been made in view of the above-described problems, and an object of the present disclosure is to provide a power storage device that is capable of suppressing an increase in routing length of a bus bar and ensuring the degree of freedom of a position at which an external terminal is mounted.

A power storage device includes: a power storage module in which a plurality of power storage cells are stacked in a stacking direction; and a first bus bar and a second bus bar that are connected to the power storage module. In a plan view of the power storage module as seen from a position away from the power storage module in the stacking direction, the power storage module includes: a first long side portion and a second long side portion that extend in a long-side direction; and a first short side portion and a second short side portion that extend in a short-side direction. The power storage module includes: a first current collector plate provided in the first long side portion and extending in the long-side direction; and a second current collector plate provided in the second long side portion and extending in the long-side direction. The first bus bar includes a first connecting portion provided in the first current collector plate. The second bus bar includes a second connecting portion provided in the second current collector plate and extending in the long-side direction. The first connecting portion is formed to extend from one end to the other end of the first current collector plate in the long-side direction. The second connecting portion is formed to extend from one end to the other end of the second current collector plate in the long-side direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a power storage device 1 according to the present embodiment.
Fig. 2 is a cross-sectional view taken along a line II-II in Fig. 1.
Fig. 3 is a perspective view schematically showing a power storage module 20, bus bars 21, 22, and the like.
Fig. 4 is a perspective view showing a power storage cell 30.
Fig. 5 is a cross-sectional view showing a part of power storage cell 30.
Fig. 6 is a plan view of power storage module 20 and bus bars 21 and 22 as seen from a position P away from power storage module 20 in a stacking direction H.
Fig. 7 is a perspective view showing a power storage device 1A according to a first modification.
Fig. 8 is a plan view showing power storage module 20 and the like provided in power storage device 1A.
Fig. 9 is a perspective view showing a power storage device 1B according to a second modification.
Fig. 10 is a plan view schematically showing a power storage module 20A and the like provided in power storage device 1B.
Fig. 11 is a plan view schematically showing a power storage device 1C according to a comparative example.

### DESCRIPTION OF THE PREFERRED EMBODIMENTS

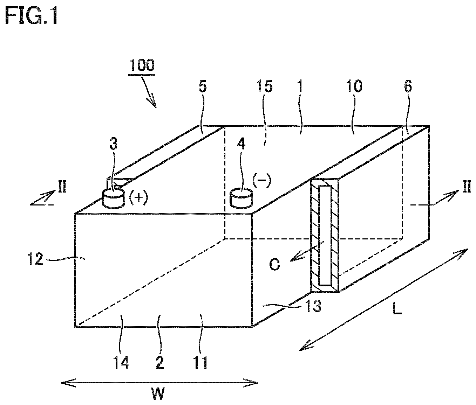

A power storage device according to the present embodiment will be hereinafter described with reference to Figs. 1 to 11. Among the configurations shown in Figs. 1 to 11, the same or substantially the same configurations are denoted by the same reference characters, and the descriptions thereof will not be repeated.

Fig. 1 is a perspective view schematically showing a power storage device 1 and the like according to the present embodiment. A battery pack 100 includes a power storage device 1 and cooling devices 5 and 6. Power storage device 1 includes an accommodation case 2, a positive electrode external terminal 3, and a negative electrode external terminal 4.

Accommodation case 2 is formed in a substantially rectangular parallelepiped shape. Accommodation case 2 includes a top plate 10, a bottom plate 11, side walls 12 and 13, and end walls 14 and 15. Side walls 12 and 13 are arranged in a width direction W, and formed to extend in a long-side direction L. End walls 14 and 15 are arranged in long-side direction L, and formed to extend in width direction W.

Positive electrode external terminal 3 and negative electrode external terminal 4 are provided on the upper surface of top plate 10. Positive electrode external terminal 3 and negative electrode external terminal 4 are spaced apart from each other in width direction W.

Cooling device 5 is disposed on side wall 12, and cooling device 6 is disposed on side wall 13. A coolant C flows through cooling devices 5 and 6. Fig. 1 shows a partial cross-sectional view of cooling devices 5 and 6, each of which is partially not shown.

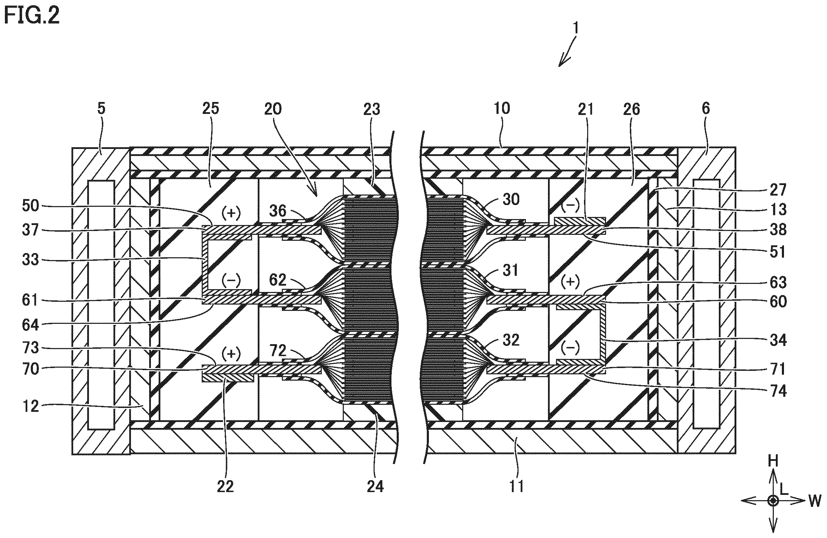

Fig. 2 is a cross-sectional view taken along a line II-II in Fig. 1. Power storage device 1 includes a power storage module 20, bus bars 21 and 22 connected to power storage module 20, expansion absorbing materials 23 and 24, insulating members 25 and 26, and an insulating film 27.

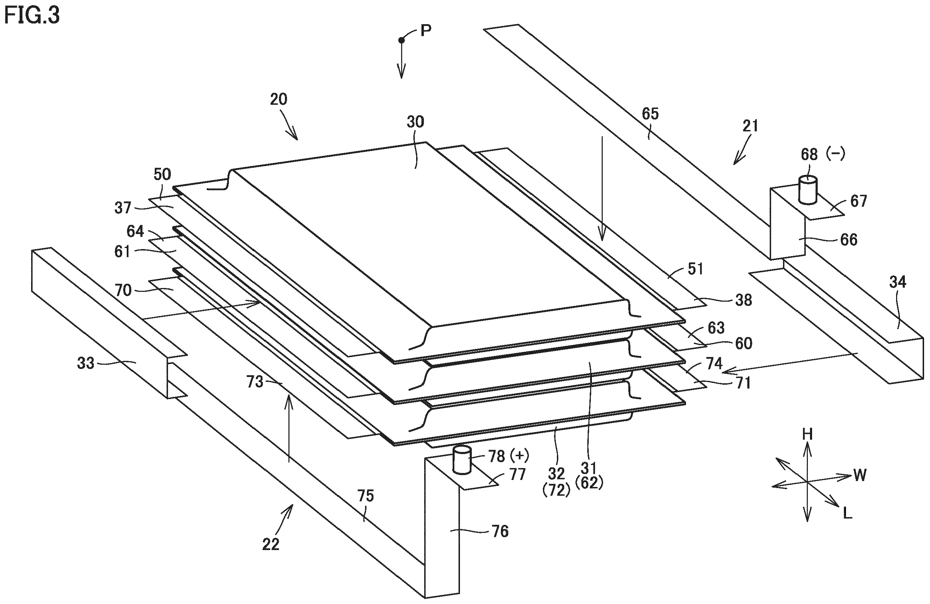

Fig. 3 is a perspective view schematically showing power storage module 20, bus bars 21, 22, and the like. Power storage module 20 includes a plurality of power storage cells 30, 31 and 32 stacked in stacking direction H, and a plurality of connecting members 33 and 34.

Since power storage cells 31 and 32 have substantially the same configuration as that of power storage cell 30, power storage cell 30 will be hereinafter specifically described.

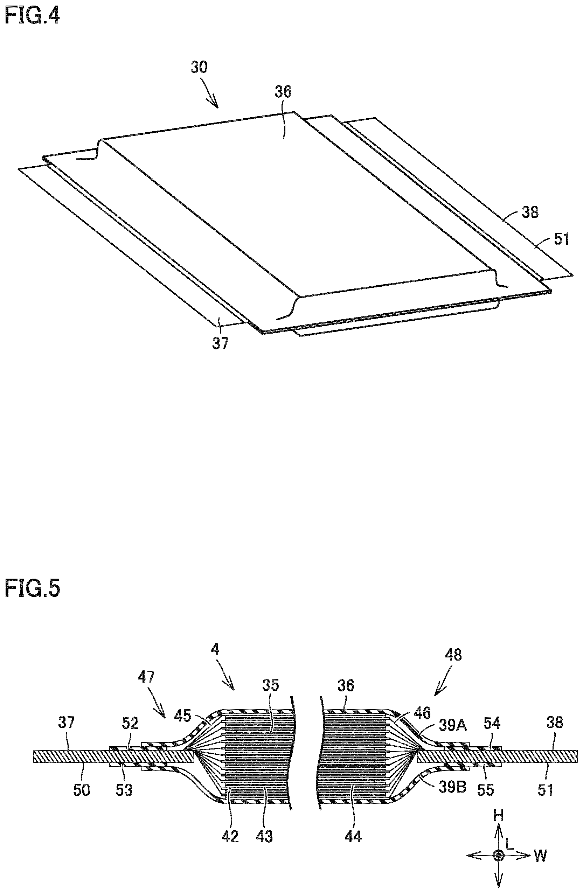

Fig. 4 is a perspective view showing power storage cell 30, and Fig. 5 is a cross-sectional view showing a part of power storage cell 30. Power storage cell 30 includes an electrode assembly 35, an exterior body 36, a positive electrode current collector plate 37, and a negative electrode current collector plate 38.

Exterior body 36 is formed of an aluminum laminate film or the like. Exterior body 36 accommodates electrode assembly 35 and an electrolyte solution (not shown).

Exterior body 36 includes an upper film 39A and a lower film 39B. Upper film 39A is disposed to cover electrode assembly 35 from above while lower film 39B is disposed to cover electrode assembly 35 from below.

Note that the outer peripheral edge of upper film 39A and the outer peripheral edge of lower film 39B are bonded together by an adhesive (not shown).

Electrode assembly 35 is formed in a rectangular parallelepiped shape. Electrode assembly 35 includes a plurality of positive electrode sheets 42, a plurality of separators 43, and a plurality of negative electrode sheets 44 that are stacked in stacking direction H. Separator 43 is disposed between positive electrode sheet 42 and negative electrode sheet 44.

Each positive electrode sheet 42 includes an aluminum foil 45 and a positive electrode composite layer formed on each of the front and rear surfaces of aluminum foil 45. Each negative electrode sheet 44 includes a copper foil 46 and a negative electrode composite layer formed on each of the front and rear surfaces of copper foil 46.

Aluminum foil 45 is provided to extend outside electrode assembly 35 on the side of one side surface 47 of electrode assembly 35, and copper foil 46 is provided to extend outside electrode assembly 35 on the side of the other side surface 48 of electrode assembly 35. Side surfaces 47 and 48 are arranged in width direction W and formed to extend in long-side direction L.

Positive electrode current collector plate 37 is formed of aluminum or the like. Positive electrode current collector plate 37 is disposed on the side surface 47 side, and a plurality of aluminum foils 45 are welded to positive electrode current collector plate 37.

An adhesive 52 is formed on the upper surface of positive electrode current collector plate 37 to bond upper film 39A to positive electrode current collector plate 37. An adhesive 53 is formed on the lower surface of positive electrode current collector plate 37 to bond lower film 39B to positive electrode current collector plate 37. Note that adhesives 52 and 53 extend to the outside of exterior body 36 in width direction W.

Positive electrode current collector plate 37 protrudes on the outside of exterior body 36 and adhesives 52 and 53 in width direction W. Positive electrode current collector plate 37 includes an exposed portion 50 exposed from exterior body 36 and adhesives 52 and 53.

Negative electrode current collector plate 38 is formed of copper or the like. Negative electrode current collector plate 38 is disposed on the side surface 48 side, and a plurality of copper foils 46 are welded to negative electrode current collector plate 38.

An adhesive 54 is formed on the upper surface of negative electrode current collector plate 38 to bond negative electrode current collector plate 38 to upper film 39A. An adhesive 55 is formed on the lower surface of negative electrode current collector plate 38 to bond negative electrode current collector plate 38 to lower film 39B. Note that adhesives 54 and 55 extend to the outside of exterior body 36 in width direction W.

Negative electrode current collector plate 38 protrudes on the outside of exterior body 36 and adhesives 54 and 55 in width direction W. Negative electrode current collector plate 38 includes an exposed portion 51 exposed from exterior body 36 and adhesives 54 and 55.

Referring back to Fig. 2, power storage cell 31 includes a positive electrode current collector plate 60, a negative electrode current collector plate 61, and an exterior body 62. An electrode assembly and an electrolyte solution are accommodated in exterior body 62. Like positive electrode current collector plate 37, positive electrode current collector plate 60 includes an exposed portion 63. Like negative electrode current collector plate 38, negative electrode current collector plate 61 includes an exposed portion 64.

Power storage cell 32 includes a positive electrode current collector plate 70, a negative electrode current collector plate 71, and an exterior body 72. An electrode assembly and an electrolyte solution are accommodated in exterior body 72. Like positive electrode current collector plate 37, positive electrode current collector plate 70 includes an exposed portion 73. Like negative electrode current collector plate 38, negative electrode current collector plate 71 includes an exposed portion 74.

Positive electrode current collector plate 37, negative electrode current collector plate 61, and positive electrode current collector plate 70 are arranged in stacking direction H. Negative electrode current collector plate 38, positive electrode current collector plate 60, and negative electrode current collector plate 71 are arranged in stacking direction H.

Connecting member 33 is disposed to connect exposed portion 50 of positive electrode current collector plate 37 and exposed portion 64 of negative electrode current collector plate 61. Connecting member 34 is disposed to connect exposed portion 63 of positive electrode current collector plate 60 and exposed portion 74 of negative electrode current collector plate 71.

In Fig. 3, bus bar 21 is welded to the upper surface of exposed portion 51 of negative electrode current collector plate 38. Bus bar 22 is welded to the lower surface of exposed portion 73 of positive electrode current collector plate 70.

Bus bar 21 includes a connecting plate 65, a vertical wall 66, a mount 67, and a protrusion 68. Connecting plate 65 is welded to the upper surface of exposed portion 51. Connecting plate 65 is formed to extend in long-side direction L, and protrudes toward end wall 14 relative to power storage module 20. Note that connecting plate 65 is formed to extend from one end to the other end of negative electrode current collector plate 38 in long-side direction L.

Vertical wall 66 is connected to an end portion of connecting plate 65 that is located on the end wall 14 side. Vertical wall 66 is formed to extend upward from this end portion of connecting plate 65.

Mount 67 is formed at an upper end portion of vertical wall 66, and protrusion 68 is formed to protrude from mount 67. The upper end portion of protrusion 68 is connected to negative electrode external terminal 4 shown in Fig. 1.

Bus bar 22 includes a connecting plate 75, a vertical wall 76, a mount 77, and a protrusion 78. Connecting plate 75 is welded to a lower surface of exposed portion 73 of positive electrode current collector plate 70. Connecting plate 75 is formed to extend in long-side direction L and protrudes toward end wall 14 relative to power storage module 20. Note that connecting plate 75 is formed from one end to the other end of positive electrode current collector plate 70 in long-side direction L.

Mount 77 is formed at an upper end portion of vertical wall 76, and protrusion 78 is formed to protrude from mount 77. The upper end portion of protrusion 78 is connected to positive electrode external terminal 3 shown in Fig. 1.

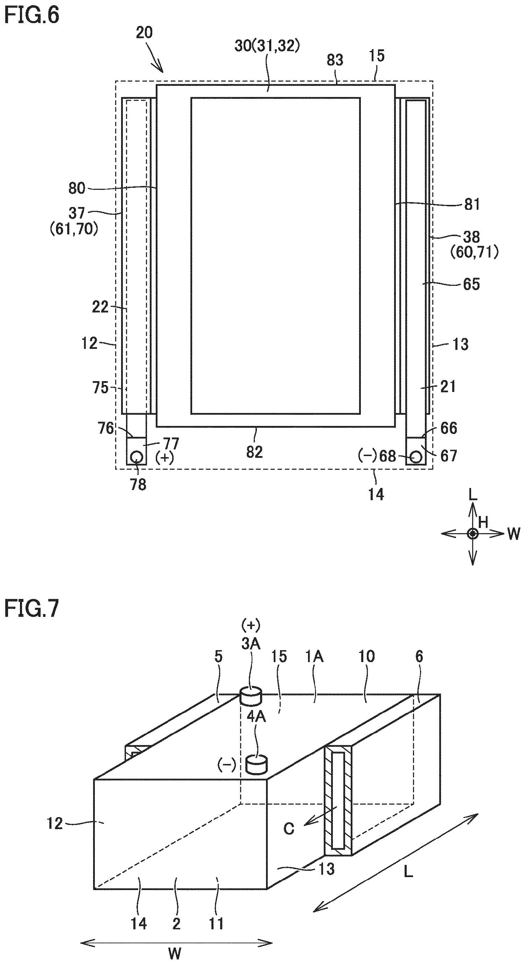

Fig. 6 is a plan view of power storage module 20 and bus bars 21 and 22 as seen from a position P away from power storage module 20 in stacking direction H. For example, Fig. 6 is a plan view of power storage module 20 and bus bars 21 and 22 as seen downward from position P shown in Fig. 3.

In Fig. 6, power storage module 20 includes long side portions 80 and 81, and short side portions 82 and 83. In the present embodiment, long side portions 80 and 81 and short side portions 82 and 83 are located along the respective outer peripheral edges of an exterior body 36.

Long side portions 80 and 81 extend in long-side direction L and are spaced apart from each other in width direction W.

Short side portions 82 and 83 extend in width direction (in the short-side direction) W, and are spaced apart from each other in long-side direction L.

Positive electrode current collector plate 37, negative electrode current collector plate 61, and positive electrode current collector plate 70 are located in long side portion 80. Positive electrode current collector plate 70 is located lowermost and formed to extend in long-side direction L.

Negative electrode current collector plate 38, positive electrode current collector plate 60, and negative electrode current collector plate 71 are located in long side portion 81, and negative electrode current collector plate 38 is located uppermost.

Connecting plate 65 of bus bar 21 is connected to negative electrode current collector plate 38 and formed to extend in long-side direction L. In long-side direction L, connecting plate 65 is formed to extend from one end to the other end of negative electrode current collector plate 38.

Connecting plate 75 of bus bar 22 is formed to extend in long-side direction L. In long-side direction L, connecting plate 75 is disposed to extend from one end side to the other end side of positive electrode current collector plate 70.

In Fig. 2, expansion absorbing material 23 is disposed between the upper surface of power storage module 20 and top plate 10 of accommodation case 2. Expansion absorbing material 24 is disposed between the lower surface of power storage module 20 and bottom plate 11 of accommodation case 2. Expansion absorbing materials 23 and 24 each include a package and a dilatancy material contained in the package.

Insulating member 25 is provided so as to extend from side wall 12 to reach power storage module 20. Exposed portion 50 of positive electrode current collector plate 37, exposed portion 64 of negative electrode current collector plate 61, connecting member 33, and at least a part of bus bar 22 are located inside insulating member 25.

Insulating member 26 is provided so as to extend from side wall 13 to reach power storage module 20. At least a part of bus bar 21, exposed portion 51 of negative electrode current collector plate 38, exposed portion 63 of positive electrode current collector plate 60, and exposed portion 74 of negative electrode current collector plate 71 are located inside insulating member 26.

Power storage device 1 configured as described above is mounted, for example, on an electrically powered vehicle. Power storage device 1 repeats charging and discharging.

Upon charging and discharging of power storage device 1, power storage module 20 deforms so as to expand in stacking direction H. At this time, expansion absorbing materials 23 and 24 deform to allow power storage module 20 to deform so as to expand. Thereby, even when power storage module 20 deforms so as to expand, the load applied to accommodation case 2 can be reduced through expansion absorbing materials 23 and 24. Thus, deformation of accommodation case 2 can be suppressed.

Traveling and the like of the electrically powered vehicle may cause vibration in power storage device 1 mounted on the electrically powered vehicle. For example, power storage device 1 may vibrate such that the center of power storage device 1 in long-side direction L acts as an antinode of vibration.

At this time, the speed at which the central portion of power storage device 1 displaces is faster than the speed at which power storage module 20 expands during charging and discharging. Expansion absorbing materials 23 and 24 each include a dilatancy material, and thus, exhibit high rigidity against high-speed deformation. Therefore, expansion absorbing materials 23 and 24 are less likely to deform, so that vibration of power storage device 1 is suppressed.

During charging and discharging of power storage device 1, the temperature of power storage module 20 rises. At this time, insulating member 25 is formed so as to cover exposed portions 50, 64, and 73, connecting member 33, and at least a part of bus bar 22. Since exposed portions 50, 64, 73, connecting member 33, and bus bar 22 each are formed of a metal material, the heat in power storage module 20 is excellently transmitted to insulating member 25 for dissipation. The heat transmitted to insulating member 25 is transmitted through side wall 12 to cooling device 5 for dissipation. In particular, connecting plate 75 of bus bar 22 is formed in an elongated shape to extend from one end to the other end of positive electrode current collector plate 70 in long-side direction L. Thus, heat can be excellently dissipated to the outside through bus bar 22.

Insulating member 26 is formed so as to cover at least a part of bus bar 21, exposed portions 51, 63, 74, and connecting member 34. Since bus bar 21, exposed portions 51, 63, 74, and connecting member 34 each are formed of a metal material, the heat in power storage module 20 is excellently transmitted to insulating member 26 for dissipation. The heat transmitted to insulating member 26 is transmitted through side wall 13 to cooling device 6 for dissipation. Thus, power storage module 20 can be excellently cooled. In particular, since connecting plate 65 of bus bar 21 is also formed in an elongated shape, heat can be excellently dissipated to the outside through bus bar 21.

In Fig. 6, connecting plate 65 of bus bar 21 is connected to negative electrode current collector plate 38 and formed to extend in long-side direction L. In long-side direction L, connecting plate 65 is formed to extend from one end to the other end of negative electrode current collector plate 38.

Thus, in the case where negative electrode external terminal 4 is provided on the end wall 14 side as in the present embodiment, vertical wall 66 and the like are connected to the end portion of connecting plate 65 on the end wall 14 side to thereby allow easy connection to negative electrode external terminal 4.

Similarly, connecting plate 75 of bus bar 22 is formed to extend in long-side direction L. In long-side direction L, connecting plate 75 is disposed from one end side to the other end side of positive electrode current collector plate 70.

Thus, in the case where positive electrode external terminal 3 is provided on the end wall 14 side as in the present embodiment, vertical wall 76 and the like are connected to the end portion of connecting plate 75 on the end wall 14 side to thereby allow easy connection to positive electrode external terminal 3.

Fig. 7 is a perspective view showing a power storage device 1A according to the first modification. In power storage device 1A, a positive electrode external terminal 3A is located on the end wall 15 side while a negative electrode external terminal 4A is located on the end wall 14 side.

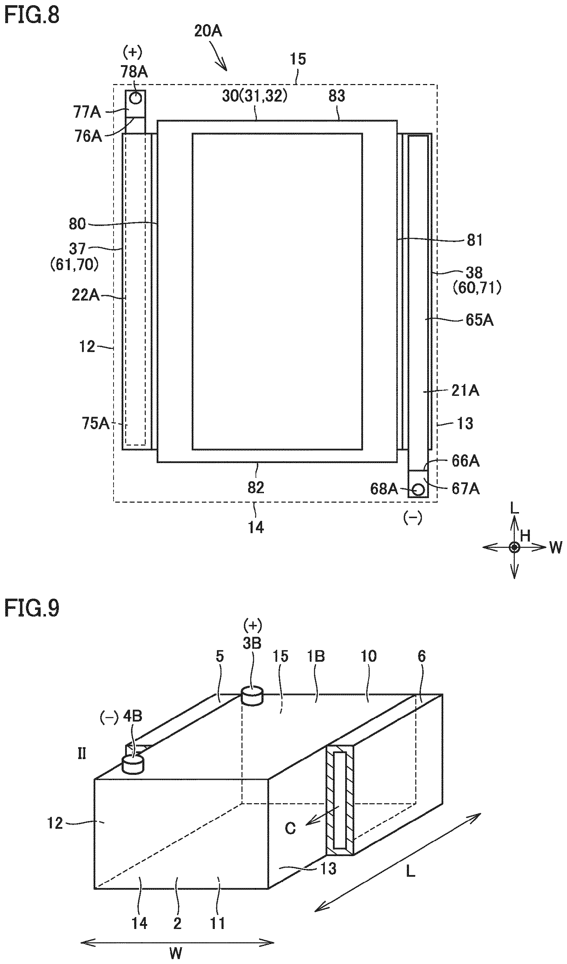

Fig. 8 is a plan view showing a power storage module 20A and the like provided in power storage device 1A. A bus bar 21A has substantially the same configuration as that of bus bar 21.

Bus bar 22A includes a connecting plate 75A, a vertical wall 76A, a mount 77A, and a protrusion 78A. Connecting plate 75A is welded to positive electrode current collector plate 70. Vertical wall 76A is connected to an end portion of connecting plate 75A on the end wall 15 side. Mount 77A is provided at an upper end portion of vertical wall 76A, and protrusion 78A is formed to protrude upward from mount 77A.

Thus, vertical wall 76A is connected at a position on the end wall 15 side to thereby allow easy connection to positive electrode external terminal 3A.

Fig. 9 is a perspective view showing a power storage device 1B according to the second modification. In power storage device 1B, a positive electrode external terminal 3B is disposed on the side wall 12 side and also on the end wall 15 side. A negative electrode external terminal 4B is disposed on the side wall 12 side and also on the end wall 14 side.

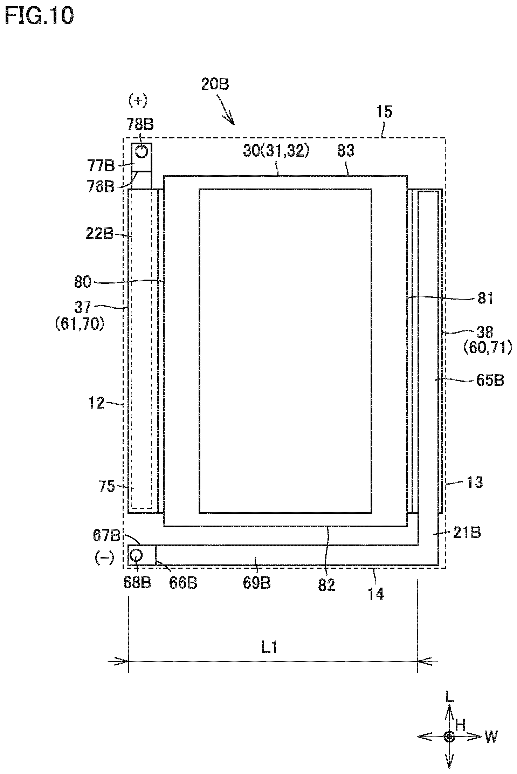

Fig. 10 is a plan view schematically showing a power storage module 20B and the like provided in power storage device 1B. A bus bar 22B is configured similarly to bus bar 22A. Bus bar 21B includes a connecting plate 65B, a routing plate 69B, a vertical wall 66B, a mount 67B, and a protrusion 68B.

Connecting plate 65B is welded to negative electrode current collector plate 38 and formed to extend in long-side direction L. Routing plate 69B is connected to an end portion of connecting plate 65B located on the end wall 14 side. Routing plate 69B is formed to extend in width direction W from the end portion of connecting plate 65B toward side wall 12. Specifically, routing plate 69B is formed to extend along short side portion 82.

Vertical wall 66B is provided at an end portion of routing plate 69B on the side wall 12 side, and mount 67B is provided at an upper end portion of vertical wall 66B. Protrusion 68B protrudes upward from mount 67B and is connected to negative electrode external terminal 4B.

In this case, short side portion 82 is shorter in length than each of long side portions 80 and 81, and thus, routing plate 69B is short in length.

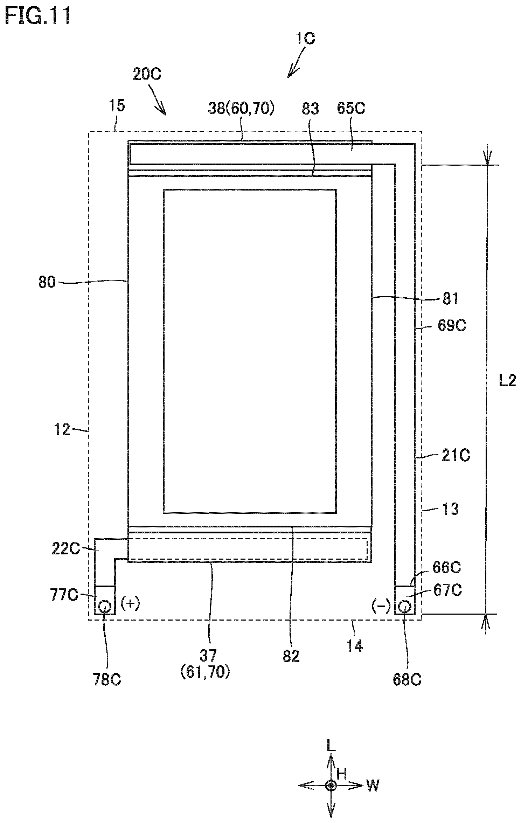

Fig. 11 is a plan view schematically showing a power storage device 1C according to a comparative example. In power storage device 1C, a positive electrode current collector plate and a negative electrode current collector plate provided in power storage module 20C are provided on the short side portion 82 side or the short side portion 83 side.

A positive electrode external terminal and a negative electrode external terminal are provided on the end wall 14 side. The positive electrode external terminal is provided on the side wall 12 side while the negative electrode external terminal is provided on the side wall 13 side.

A bus bar 22C is connected to a positive electrode current collector plate disposed on short side portion 82. A bus bar 21C is connected to the negative electrode current collector plate disposed on short side portion 83.

Bus bar 21C includes a connecting plate 65C connected to the negative electrode current collector plate, a routing plate 69C, a vertical wall 66C, a mount 67C, and a protrusion 68C.

Routing plate 69C is connected to an end portion of connecting plate 65C and formed to extend in long-side direction L. Vertical wall 66C is connected to an end portion of routing plate 69C. Mount 67C is provided at the upper end of vertical wall 66C, and a protrusion 68C is provided to protrude from mount 67C and is connected to the negative electrode external terminal.

In power storage device 1C, routing plate 69C is provided so as to allow routing of bus bar 21C. Also in power storage device 1B as described above, routing plate 69B is provided so as to allow routing of bus bar 21B.

Further, a length L1 of routing plate 69B is shorter than a length L2 of routing plate 69C. Accordingly, bus bar 21B can be shorter in routing length than bus bar 21C, and thus, can be further more improved in mountability.

Further, connecting plate 65B of bus bar 21B is longer than connecting plate 65C of bus bar 21C. Accordingly, connecting plate 65B can dissipate heat more excellently than connecting plate 65C.

As described above, according to power storage devices 1, 1A, and 1B in the present embodiments, the routing length of the bus bar can be kept short even when the mounting positions of positive and negative electrode external terminals 3 and 4 are changed. Thereby, the mounting positions of positive and negative electrode external terminals 3 and 4 can be variously changed, so that the degree of freedom in designing the power storage device can be improved. The above embodiments have been described with regard to a liquid battery cell in which an electrolyte solution is accommodated in each power storage cell, but the present disclosure can also be applicable to a solid-state battery in which a solid electrolyte is accommodated in each power storage cell.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device comprising:
a power storage module (20, 20A, 20B) in which a plurality of power storage cells (30, 31, 32) are stacked in a stacking direction; and
a first bus bar (22, 22A, 22B) and a second bus bar (21, 21A, 21B) that are connected to the power storage module (20, 20A, 20B), wherein
in a plan view of the power storage module (20, 20A, 20B) as seen from a position away from the power storage module (20, 20A, 20B) in the stacking direction, the power storage module (20, 20A, 20B) includes
a first long side portion (80) and a second long side portion (81) that extend in a long-side direction (L), and
a first short side portion (82) and a second short side portion (83) that extend in a short-side direction,
the power storage module (20, 20A, 20B) includes
a first current collector plate (70) provided in the first long side portion (80) and extending in the long-side direction (L), and
a second current collector plate (38) provided in the second long side portion (81) and extending in the long-side direction (L),
the first bus bar (22, 22A, 22B) includes a first connecting portion (75) provided in the first current collector plate (70), and
the second bus bar (21, 21A, 21B) includes a second connecting portion (65) provided in the second current collector plate (38).

2. The power storage device according to claim 1, wherein
the first connecting portion is formed to extend from one end to the other end of the first current collector plate (70) in the long-side direction (L), and
the second connecting portion is formed to extend from one end to the other end of the second current collector plate (38) in the long-side direction (L).
